# EUROPÄISCHE PATENTSCHRIFT

(11) **EP 1 234 501 B1**
(45) Veröffentlichungstag und Bekanntmachung des Hinweises auf die Patenterteilung: **07.05.2003**
(21) Anmeldenummer: 01103824.7
(22) Anmeldetag: 15.02.2001
(51) Int. Cl.: A01K 97/12

(54) **Bissanzeiger für Angelgeräte**
Bite indicator
Indicateur de touche

(43) Veröffentlichungstag der Anmeldung: 28.08.2002
(73) Patentinhaber: Hagor Sports GmbH, 32547 Bad Oeynhausen (DE)
(72) Erfinder: Kipp, Volker, 32427 Minden (DE)
(74) Vertreter: Wiebusch, Manfred

(56) Entgegenhaltungen:
- EP-A- 0 422 913
- EP-A- 0 602 879
- DE-A- 19 627 590

## Beschreibung

Die Erfindung betrifft einen Bißanzeiger mit einem lösbar von einer Angelschnur durchlaufenen Kopf und einer Spanneinrichtung, die eine quer zur Laufrichtung der Angelschnur orientierte Kraft auf den Kopf ausübt.

Der Kopf eines solchen Bißanzeigers greift an einem Abschnitt der Angelschnur an, der parallel zur Angelrute verläuft, wenn der Köder ausgeworfen ist und die Angelrute in im wesentlichen waagerechter Position auf Auflagen abgelegt ist. Durch die Wirkung der Spanneinrichtung wird die Angelschnur etwas ausgelenkt. Wenn ein Fisch anbeißt und einen Zug auf die Angelschnur ausübt, bewirkt die erhöhte Zugspannung der Angelschnur eine Bewegung des Kopfes, an der das Anbeißen des Fisches zu erkennen ist.

Wenn die Angelrute angezogen wird, um den Haken im Maul des Fisches zu verankern, muß sich die Angelschnur selbsttätig vom Kopf des Bißanzeigers lösen.

Wenn der Fisch den Köder aufgenommen hat und wegzuschwimmen versucht, wird die Angelschnur oft um eine beträchtliche Länge nachgelassen, bevor die Angelrute angezogen wird. Bei diesem Nachlassen läuft die Angelschnur oft mit sehr hoher Geschwindigkeit durch den Kopf des Bißanzeigers. Bei herkömmlichen Bißanzeigem steht die Angelschnur mit dem Kopf in Reibberührung, so daß an der Angelschnur ein beträchtlicher Verschleiß verursacht wird, der um so größer ist, je stärker die Kraft der Spanneinrichtung ist.

Aufgabe der Erfindung ist es deshalb, einen Bißanzeiger zu schaffen, bei dem Angelschnur wirksam gegen Verschleiß geschützt ist.

Diese Aufgabe wird erfindungsgemäß dadurch gelöst, daß der Kopf eine drehbare, durch die Kraft der Spanneinrichtung gegen die Angelschnur vorgespannte Laufrolle aufweist, die, wenn die Kraft einen bestimmten Wert übersteigt, in eine die Angelschnur freigebende Position schwenkbar ist.

Wenn die Schnur mit hoher Geschwindigkeit durch den Kopf des Bißanzeigers läuft, steht sie mit der drehbaren Laufrolle in Berührung, so daß an der Schnur selbst keine Reibung und somit auch kein Verschleiß auftritt. Wenn die Angelrute angezogen wird, während der Kopf des Bißanzeigers durch die Spanneinrichtung zurückgehalten wird, nimmt die auf die Angelschnur ausgeübte Querkraft zu, und wenn diese Kraft einen bestimmten Wert übersteigt, schwenkt die Laufrolle selbsttätig in die unwirksame Position, in der die Angelschnur freigegeben wird.

Vorteilhafte Ausgestaltungen der Erfindung ergeben sich aus den Unteransprüchen.

In einer bevorzugten Ausführungsform ist die Laufrolle durch einen Magneten in der wirksamen Position gehalten, so daß sich die Kraft, bei der die Laufrolle in die Freigabeposition schwenkt, durch geeignete Dimensionierung des Magneten bestimmen läßt. Auf diese Weise wird eine einfache Konstruktion des Bißanzeigers ermöglicht und eine hohe Funktionssicherheit des Freigabemechanismus erreicht.

In einer modifizierten Ausführungsform kann die Schwenkbewegung der Laufrolle auch dadurch bewirkt weren, daß der Kopf als Ganzes verschwenkt oder gedreht wird.

Bevorzugt ist die Schwenkachse, um die die Laufrolle schwenkbar ist, schräg in Bezug auf die im wesentlichen waagerechte Laufrichtung der Angelschnur angestellt. Die Kraft, die durch die Zugspannung der Angelschnur auf die Laufrolle ausgeübt wird, wird dann zerlegt in eine parallel zur Schwenkachse gerichtete Komponente und eine dazu rechtwinklige Komponente. Nur die rechtwinklige Komponente hat die Tendenz, die Laufrolle in die Freigabeposition zu schwenken. Dies bedeutet, daß auf die Angelschnur eine höhere Querkraft ausgeübt werden kann, ohne daß die Laufrolle in die Freigabeposition schwenkt. Wenn dagegen die Angelrute angezogen wird, so wird das freie Ende der Angelrute angehoben, und die Angelrute und die parallel dazu verlaufende Schnur kommen in eine Position, in der sie annähernd parallel zur Schwenkachse der Laufrolle orientiert sind. Unter diesen Bedingungen wird die gesamte Querkraft im Sinne einer Verschwenkung der Laufrolle in die Freigabeposition wirksam, so daß eine schnelle und widerstandsarme Freigabe der Angelschnur erreicht wird.

Bei herkömmlichen Bißanzeigern ist der Kopf üblicherweise an einem schwenkbaren Arm angeordnet, und die Spanneinrichtung wird entweder durch ein Gewicht oder ein elastisches Zugglied gebildet, das den Arm und damit den Kopf nach unten zieht. In einer bevorzugten Ausführungsform der Erfindung wird die Spanneinrichtung durch ein elastisches Zugglied gebildet, das mit einem Ende an einem stationären Halter und mit dem anderen Ende an dem schwenkbarem Arm verankert ist, und zumindest einer dieser Verankerungspunkte ist in seiner Position verstellbar, so daß sich die mit Hilfe der Spanneinrichtung erzeugte Querkraft präzise dosieren läßt. Diese Möglichkeit, die Querkraft fein zu dosieren, ist auch unabhängig von den Merkmalen des Anspruchs 1 von Vorteil. Gemäß einem weiteren Aspekt hat die Erfindung daher auch einen Bißanzeiger zum Gegenstand, mit einem lösbar von einer Angelschnur durchlaufenen Kopf, der auf einem schwenkbar an einem Halter angebrachten Arm sitzt, und einer Spanneinrichtung, die eine quer zur Laufrichtung der Angelschnur orientierte Kraft auf den Kopf ausübt, dadurch gekennzeichnet, daß die Spanneinrichtung durch ein elastisches Zugglied gebildet wird, das mit einem Ende an dem Halter und mit dem anderen Ende an dem schwenkbaren Arm angreift, und daß der Angriffspunkt mindestens eines Endes des Zuggliedes an dem Arm oder dem Halter verstellbar ist.

Bevorzugt greift das Zugglied, beispielsweise ein Gummiband, an einem Schieber an, der auf dem schwenkbaren Arm verschiebbar ist. Die Vorspannung des Zuggliedes läßt sich folglich einstellen, indem der Schieber auf den schwenkbaren Arm verschoben wird. Je weiter der Schieber in Richtung auf das freie Ende des schwenkbaren Armes verstellt wird, desto stärker wird das Zugglied gedehnt und desto größer wird zugleich der Hebelarm, über den das Zugglied an dem schwenkbaren Arm angreift. Erforderlichenfalls kann der Schieber mit einer Stellschraube oder dergleichen an dem schwenkbaren Arm fixiert werden. Da jedoch durch das Zugglied ein hoher Reibschluß zwischen dem Schieber und dem schwenkbaren Arm bewirkt wird, reicht im allgemeinen eine reibschlüssige Fixierung des Schiebers aus, so daß die Einstellung der Zugkraft beträchtlich vereinfacht wird.

Im folgenden wird ein Ausführungsbeispiel der Erfindung anhand der Zeichnung näher erläutert.

Es zeigen:
- Fig. 1: eine Seitenansicht eines Teils einer Angelrute und des Bißanzeigers;
- Fig. 2: eine vergrößerte Seitenansicht eines Kopfes des Bißanzeigers;
- Fig. 3: eine Ansicht des Kopfes in Richtung der Pfeile III-III in Figur 2; und
- Fig. 4 bis 6: Darstellungen entsprechend Figuren 1 bis 3 für eine Situation, in der die Angelrute aufwärts geschwenkt wurde und die Angelschnur vom Bißanzeiger freigegeben wird.

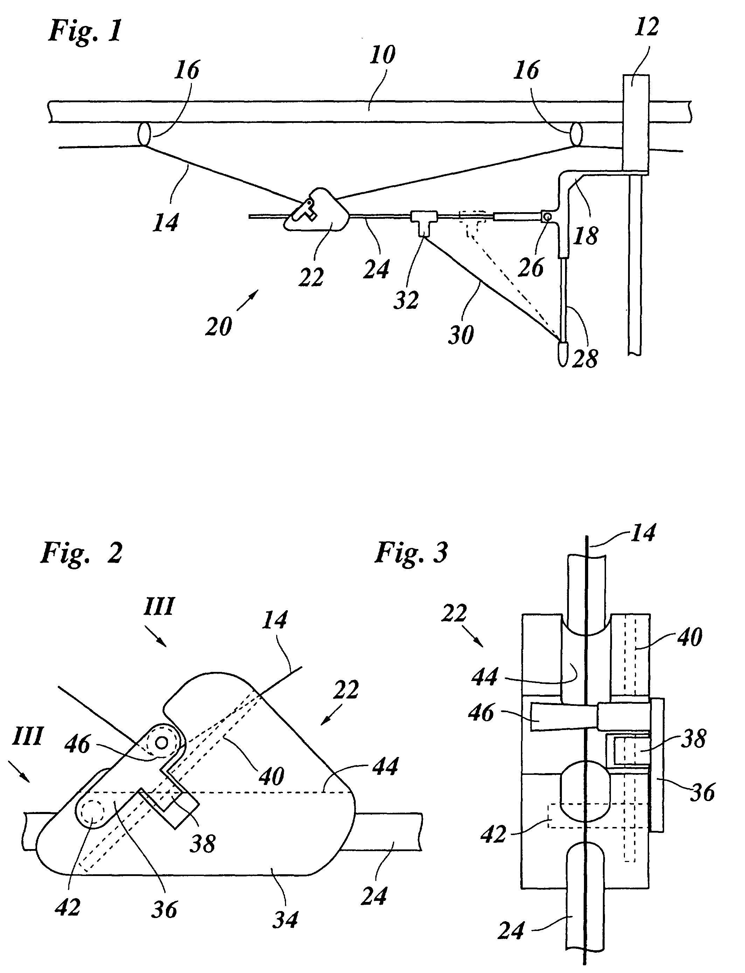

In Figur 1 ist ein Abschnitt einer Angelrute 10 dargestellt, die in im wesentlichen waagerechter Position auf mehreren sogenannten Y-Auflagen 12 aufliegt, von denen in Figur 1 nur eine gezeigt ist. Eine Angelschnur 14 ist im wesentlichen parallel zu der Angelrute 10 durch an der Angelrute befestigte Ringösen 16 geführt. In Figur 1 verläuft die Angelschnur 14 von links nach rechts von der Angelwinde zum Köder.

An der Y-Auflage 12 ist ein Halter 18 für einen Bißanzeiger 20 befestigt. Der Bißanzeiger weist einen Kopf 22 auf, der auf einem schwenkbaren Arm 24 sitzt. Der Arm 24 ist durch ein Gelenk 26 mit dem Halter 18 verbunden und ist somit in einer vertikalen Ebene schwenkbar. Der winkelförmige Halter 18 hat an seinem vertikalen Schenkel einen nach unten weisenden Fortsatz 28, dessen unteres Ende über ein als elastisches Zugglied dienendes Gummiband 30 mit einem Schieber 32 verbunden ist, der reibschlüssig auf dem Arm 24 verstellbar ist. Durch das Gummiband 30 wird somit eine abwärts gerichtete Kraft auf den Arm 24 und den Kopf 22 ausgeübt.

Die Angelschnur 14 läuft durch den Kopf 22 des Bißanzeigers und wird daher durch den Bißanzeiger 20 nach unten, also quer zu ihrer Laufrichtung ausgelenkt, bis eine Balance erreicht ist zwischen der Zugspannung der Angelschnur 14 und der abwärts gerichteten Kraft, wie aus den Gewichtskräften und der Zugkraft des Gummibandes 30 resultiert.

Wenn ein Fisch anbeißt und an der Angelschnur 14 zieht, wird die Angelschnur von der Winde abgezogen, so daß sie mit einer der Schwimmgeschwindigkeit des Fisches entsprechenden Geschwindigkeit durch den Kopf 22 hindurchläuft. Gleichzeitig erhöht sich dabei die Zugspannung der Angelschnur 14, so daß sich der Kopf 22 nach oben bewegt. An dieser Bewegung ist das Anbeißen des Fisches zu erkennen.

Die Kraft, mit der der Kopf 22 durch das Gummiband 30 nach unten gezogen wird, läßt sich mit Hilfe des Schiebers 32 feinfühlig an den jeweiligen Anwendungsfall, beispielsweise an die Art des verwendeten Köders anpassen. Wenn der Schieber 32 beispielsweise nach rechts in die in Figur 1 gestrichelt eingezeichnete Position verschoben wird, so nimmt die Länge und damit die Zugspannung des Gummibandes 30 ab, und gleichzeitig verkürzt sich der Hebelarm, über den das Gummiband auf den Arm 24 wirkt, so daß ein kleineres Drehmoment auf den Arm 24 ausgeübt wird. Umgekehrt ergibt sich eine Erhöhung des Drehmoments, wenn der Schieber 32 in Figur 1 nach links in Richtung auf den Kopf 22 bewegt wird. Wahlweise oder zusätzlich kann die Zugkraft des Gummibandes 30 auch dadurch erhöht werden, daß der Fortsatz 28 weiter nach unten aus dem Halter 18 herausgezogen oder herausgeschraubt wird.

In Figuren 2 und 3 ist der Kopf 22 des Bißanzeigers vergrößert dargestellt. Dieser Kopf 22 weist einen annähernd prismenförmigen Grundkörper 34 aus Kunststoff auf, an dem seitlich eine Trägerplatte 36 aus magnetisierbarem Metall angebracht ist. Die Trägerplatte 36 ist mit Hilfe eines Scharniers 38 um eine schräg zu dem Arm 24 durch den Grundkörper 34 verlaufende Schwenkachse 40 schwenkbar und wird durch einen in den Grundkörper 34 eingebetteten Magneten 42 in der in Figuren 2 und 3 gezeigten Position gehalten.

In dem Grundkörper 34 ist in der Mitte eine parallel zu dem Arm 24 verlaufende Nut 44 ausgebildet, durch welche die Angelschnur 14 hindurchlaufen kann. Eine Laufrolle 46 ist mit einem Ende drehbar an der Trägerplatte 36 gelagert, vorzugsweise mittels Kugellager, und wird in dem in Figuren 2 und 3 gezeigten Zustand in einer Position gehalten, in der sie sich quer über die Nut 44 erstreckt. Die Angelschnur 14 läuft unter der Laufrolle 46 hindurch, so daß die quergerichtete Zugkraft, die mit Hilfe des Gummibandes 30 auf den Kopf 22 ausgeübt wird, durch die Laufrolle 46 auf die Angelschnur 14 übertragen wird. Wenn die Angelschnur 14 abgezogen wird, kann sich die Laufrolle 46 drehen, so daß an der Angelschnur keine Reibung und damit auch kein Verschleiß auftritt.

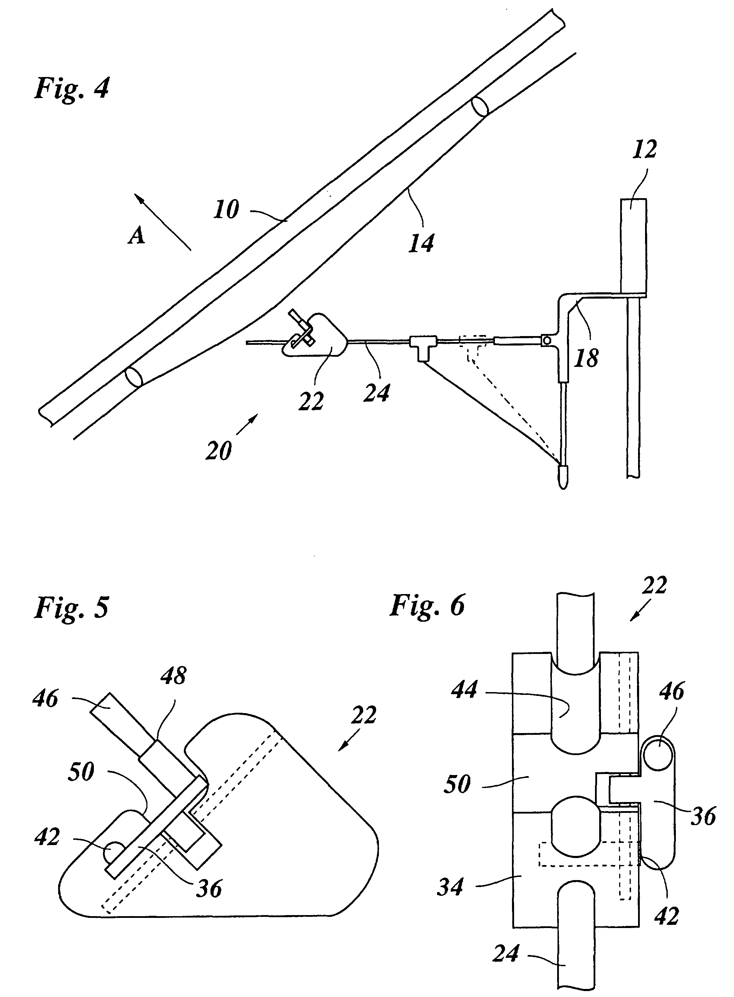

Wenn der Angler die Angelrute erfaßt und ruckartig anzieht, so wird die Angelrute 10 aufwärts in die in Figur 4 gezeigte Position geschwenkt und in Richtung des Pfeiles A in Figur 4 zurückgezogen. Entsprechend übt die Angelschnur 14 einen Zug in dieser Richtung auf die Laufrolle 46 auf. Da dieser Zug annähernd rechtwinklig zur Schwenkachse 40 orientiert ist, wird die auf die Laufrolle 46 ausgeübte Zugkraft unvermindert in ein Drehmoment umgesetzt, das die Tendenz hat, die Laufrolle und die Trägerplatte 36 in die in Figuren 5 und 6 gezeigte Position zu verschwenken. Dabei wird die Kraft des Magneten 42 überwunden, so daß die Trägerplatte von dem Magneten 42 abgelöst und um etwa 90° geschwenkt wird. Die Laufrolle 46 liegt dann seitlich neben der Nut 44, so daß die Angelschnur frei aus der Nut austreten kann. Die Laufrolle 46 ist vom freien Ende aus konisch zu einer Schulter 48 hin verjüngt. In dem in Figuren 1 bis 3 gezeigten Zustand wird daher die Angelschnur 14 so geführt, daß sie etwa mittig durch die Nut 44 verläuft, während in dem in Figuren 4 bis 6 gezeigten Zustand die Angelschnur von dem konischen Teil der Laufrolle 46 abgleiten kann, ohne sich daran zu verfangen. Somit wird eine Beschädigung der Angelschnur 14 auch dann sicher verhindert, wenn die Angelrute aufgenommen und die Angelschnur aus dem Bißanzeiger gelöst wird.

Die Nut 44 des Grundkörpers 34 ist im gezeigten Beispiel durch eine Ausnehmung 50 unterbrochen, die in dem in Figuren 2 und 3 gezeigten Zustand die Laufrolle 46 so aufnimmt, daß sie nicht über die Oberfläche des Grundkörpers 34 übersteht. Hierdurch wird verhindert, daß die Laufrolle 46 unabsichtlich in die Freigabeposition gemäß Figuren 5 und 6 geschwenkt wird.

## Patentansprüche

1. Bißanzeiger mit einem lösbar von einer Angelschnur (14) durchlaufenen Kopf (22) und einer Spanneinrichtung (24, 30), die eine quer zur Laufrichtung der Angelschnur (14) orientierte Kraft auf den Kopf (22) ausübt, **dadurch gekennzeichnet, daß** der Kopf (22) eine drehbare, durch die Kraft der Spanneinrichtung (24, 30) gegen die Angelschnur (14) vorgespannte Laufrolle (46) aufweist, die, wenn die Kraft einen bestimmten Wert übersteigt, in eine die Angelschnur (14) freigebende Position schwenkbar ist.

2. Bißanzeiger nach Anspruch 1, **dadurch gekennzeichnet, daß** die Laufrolle (46) durch einen Magneten (42) lösbar in der Position gehalten ist, in der sie die Angelschnur (14) erfaßt.

3. Bißanzeiger nach Anspruch 2, **dadurch gekennzeichnet, daß** die Laufrolle (46) mit einem Ende drehbar an einer Trägerplatte (36) gelagert ist, die mit einem Scharnier (38) schwenkbar an einem Grundkörper (34) des Kopfes (22) angebracht ist und durch den in den Grundkörper (34) eingebetteten Magneten (42) anziehbar ist.

4. Bißanzeiger nach Anspruch 3, **dadurch gekennzeichnet, daß** die Laufrolle (46) in der Position, in der sie die Angelschnur (14) erfaßt, in einer Ausnehmung (50) des Grundkörpers (34) liegt und sich quer über eine in dem Grundkörper (34) ausgebildete Nut (44) erstreckt, durch welche die Angelschnur (14) hindurchläuft.

5. Bißanzeiger nach einem der vorstehenden Ansprüche, **dadurch gekennzeichnet, daß** die Schwenkachse (40) der Laufrolle (46) in der Gebrauchsstellung des Bißanzeigers (20) schräg zur Laufrichtung der Angelschnur (14) verläuft.

6. Bißanzeiger nach Anspruch 5, **dadurch gekennzeichnet, daß** der Kopf (22) an einem schwenkbaren Arm (24) gehalten ist und daß die Schwenkachse (40) der Laufrolle (46) schräg zu dem Arm (24) verläuft.

7. Bißanzeiger, nach eienm der vorstehenden Ansprüche, mit einem lösbar von einer Angelschnur (14) durchlaufenen Kopf (22), der auf einem schwenkbar an einem Halter (18) angebrachten Arm (24) sitzt, und einer Spanneinrichtung, die eine quer zur Laufrichtung der Angelschnur (14) orientierte Kraft auf den Kopf (22) ausübt, **dadurch gekennzeichnet, daß** die Spanneinrichtung durch ein elastisches Zugglied (30) gebildet wird, das mit einem Ende an dem Halter (18) und mit dem anderen Ende an dem schwenkbaren Arm (24) angreift, und daß der Angriffspunkt mindestens eines Endes des Zuggliedes (30) an dem Arm (24) oder dem Halter (18) verstellbar ist.

8. Bißanzeiger nach Anspruch 7, **dadurch gekennzeichnet, daß** das Zugglied (30) an einem Schieber (32) verankert ist, der auf dem schwenkbaren Arm (24) verschiebbar ist.

9. Bißanzeiger nach Anspruch 8, **dadurch gekennzeichnet, daß** der Schieber (32) reibschlüssig auf dem Arm (24) verstellbar ist.

10. Bißanzeiger nach einem der Ansprüche 7 bis 9, **dadurch gekennzeichnet, daß** das Zuglied ein Gummiband (30) ist.

## Claims

1. Bite indicator having a head (22), through which a fishing line (14) runs in a releasable manner, and a tension device (24, 30) which applies a force, which is orientated transversely to the direction of travel of the fishing line (14), to the head (22), **characterised in that** the head (22) has a rotatable roller (46) which is biased against the fishing line (14) by the force of the tension device (24, 30) and which, when the force exceeds a given value, can be pivoted into a position which releases the fishing line (14).

2. Bite indicator according to claim 1, **characterised in that** the roller (46) is held releasably by a magnet (42) in the position in which it grips the fishing line (14).

3. Bite indicator according to claim 2, **characterised in that** the roller (46) is supported rotatably at one end on a carrier plate (36) which is fitted pivotably to a base member (34) of the head (22) by means of a hinge (38) and which can be attracted by the magnet (42) embedded in the base member (34).

4. Bite indicator according to claim 3, **characterised in that** the roller (46) in the position in which it grips the fishing line (14) is located in a recess (50) of the base member (34) and extends transversely over a groove (44) which is formed in the base member (34) and through which the fishing line (14) runs.

5. Bite indicator according to any one of the preceding claims, **characterised in that** the pivot axis (40) of the roller (46) in the position of use of the bite indicator (20) extends obliquely to the direction of travel of the fishing line (14).

6. Bite indicator according to claim 5, **characterised in that** the head (22) is held on a pivotable arm (24), and **in that** the pivot axis (40) of the roller (46) extends obliquely to the arm (24).

7. Bite indicator according to any one of the preceding claims, having a head (22), through which a fishing line (14) runs in a releasable manner and which is seated on an arm (24) which is fitted pivotably to a holder (18), and a tension device which applies a force, which is orientated transversely to the direction of travel of the fishing line (14), to the head (22), **characterised in that** the tension device is formed by a resilient tension element (30) which acts at one end on the holder (18) and, at the other end, on the pivotable arm (24), and **in that** the engagement point of at least one end of the tension element (30) is displaceable on the arm (24) or the holder (18).

8. Bite indicator according to claim 7, **characterised in that** the tension element (30) is fastened to a slide (32) which can be displaced on the pivotable arm (24).

9. Bite indicator according to claim 8, **characterised in that** the slide (32) can be displaced on the arm (24) with frictional engagement.

10. Bite indicator according to any one of claims 7 to 9, **characterised in that** the tension element is a rubber band (30).

## Revendications

1. Indicateur de touche comportant une tête (22) traversée de manière séparable par un fil de canne à pêche (14) ainsi qu'un dispositif de tension (24, 30) qui exerce sur la tête (22) une force orientée transversalement à la direction de passage du fil de canne à pêche (14), **caractérisé en ce que** la tête (22) comporte un galet de roulement (46) tournant, précontraint par la force du dispositif de tension (24, 30) contre le fil de canne à pêche (14) qui, lorsque la force dépasse une valeur déterminée, peut pivoter dans une position qui libère le fil de canne à pêche.

2. Indicateur de touche selon la revendication 1, **caractérisé en ce que** le galet de roulement (46) est maintenu, de manière séparable, par un aimant (42), dans la position dans laquelle il saisit le fil de canne à pêche (14).

3. Indicateur de touche selon la revendication 2, **caractérisé en ce que** le galet de roulement (46) est monté tournant, par une extrémité, sur une plaque de support (36) qui, au moyen d'une charnière (38), est placée pivotante sur un corps de base (34) de la tête (22), et peut être attirée par l'aimant (42) intégré dans le corps de base (34).

4. Indicateur de touche selon la revendication 3, **caractérisé en ce que** dans la position dans laquelle il saisit le fil de canne à pêche (14), le galet de roulement (46) se trouve dans un évidement (50) du corps de base (34) et s'étend en travers d'une rainure (44) réalisée dans le corps de base (34), rainure à travers laquelle passe le fil de canne à pêche (14).

5. Indicateur de touche selon l'une des revendications précédentes, **caractérisé en ce que** l'axe de pivotement (44) du galet de roulement (46) s'étend, en position d'utilisation de l'indicateur de touche (20), obliquement par rapport à la direction de passage du fil de canne à pêche (14).

6. Indicateur de touche selon la revendication 5, **caractérisé en ce que** la tête (22) est maintenue sur un bras (24) pivotant et **en ce que** l'axe de pivotement (40) du galet de roulement (46) s'étend obliquement par rapport au bras (24).

7. Indicateur de touche selon l'une des revendications précédentes, comportant une tête (22), traversée de manière séparable par un fil de canne à pêche (14) et qui repose sur un bras (24) placé pivotant sur un support (18) et comportant un dispositif de tension qui exerce sur la tête (22) une force orientée transversalement à la direction de passage du fil de canne à pêche (14), **caractérisé en ce que** le dispositif de tension est constitué par un organe de traction (30) élastique qui, par une extrémité, agit sur le support (18) et par l'autre extrémité sur le bras (24) pivotant, et **en ce que** le point d'action d'au moins une extrémité de l'organe de traction (30) est réglable sur le bras (24) ou support (18).

8. Indicateur de touche selon la revendication 7, **caractérisé en ce que** l'organe de traction (30) est ancré sur un coulisseau (32) qui peut coulisser sur le bras (24) pivotant.

9. Indicateur de touche selon la revendication 8, **caractérisé en ce que** le coulisseau (32) est réglable par friction sur le bras (24).

10. Indicateur de touche selon l'une des revendications 7 à 9, **caractérisé en ce que** l'organe de traction est une bande en caoutchouc (30).
